# DEMANDE DE BREVET EUROPEEN

(11) **EP 2 283 720 A1**
(43) Date de publication de la demande: **16.02.2011**
(21) Numéro de dépôt: 10172679.2
(22) Date de dépôt: 12.08.2010
(51) Int. Cl.: A01G 13/04, A01G 13/02

(54) **Serre de protection pour au moins une plante**

(30) Priorité: 14.08.2009 FR 0955674
(71) Demandeur: Pressat, André, 86130 Saint Georges les Baillargeaux (FR)
(72) Inventeur: Pressat, André, 86130 Saint Georges les Baillargeaux (FR)
(74) Mandataire: Bloch & Bonnétat

(57) **Abrégé**

La présente invention porte sur une serre de protection (1) pour au moins une plante se présentant sous la forme d'une enveloppe tubulaire verticale (2) comportant :
- une face inférieure ouverte (3), destinée à permettre l'introduction de la plante à l'intérieur de l'enveloppe (2),
- une face supérieure ouverte (4) permettant un accès à la plante,

La serre est caractérisée par le fait qu'elle comporte des moyens (5, 6) de fermeture de la face supérieure (4) agencés pour coopérer :
- selon une première position de fermeture supérieure dans laquelle les moyens de fermeture (5, 6) s'étendent à l'extérieur de l'enveloppe tubulaire (2) pour permettre une circulation d'air contrôlée dans la serre (1) et
- selon une deuxième position de fermeture inférieure dans laquelle les moyens de fermeture (5, 6) s'étendent à l'intérieur de l'enveloppe tubulaire (2) pour limiter la circulation d'air dans la serre par ladite face supérieure (4).

## Description

L'invention concerne le domaine de l'agriculture et plus particulièrement les serres individuelles de protection que l'on place sur des plantes à protéger.

On connaît dans l'art antérieur des serres individuelles en forme de cloche, réalisées en matière plastique dur ou en verre, qui ont comme inconvénient principal de concentrer la chaleur de manière très importante à l'intérieur de la serre ce qui peut conduire les plantes à « griller ». En outre, de telles serres sont fragiles et encombrantes.

Afin de remédier à ces inconvénients, l'invention concerne une serre de protection pour au moins une plante se présentant sous la forme d'une enveloppe tubulaire verticale comportant :
- une face inférieure ouverte, destinée à permettre l'introduction de la plante à l'intérieur de l'enveloppe,
- une face supérieure ouverte permettant un accès à la plante,
   serre caractérisée par le fait qu'elle comporte des moyens de fermeture de la face supérieure agencés pour coopérer :
- selon une première position de fermeture supérieure dans laquelle les moyens de fermeture s'étendent à l'extérieur de l'enveloppe tubulaire pour permettre une circulation d'air contrôlée dans la serre et
- selon une deuxième position de fermeture inférieure dans laquelle les moyens de fermeture s'étendent à l'intérieur de l'enveloppe tubulaire pour limiter la circulation d'air dans la serre par ladite face supérieure.

La serre protège efficacement la plante par déplacement des moyens mobiles de fermeture selon plusieurs positions différentes (position ouverte aérée, position fermée aérée et position d'isolation) en fonction des conditions extérieures (forte chaleur, gelée), la serre s'adaptant aux conditions extérieures.

De préférence, les moyens de fermeture se présentent sous la forme d'au moins deux volets mobiles solidaires de l'enveloppe. Les volets sont avantageusement fabriqués dans la même matière que l'enveloppe ce qui facilite la fabrication de la serre tout en limitant son coût.

De préférence encore, le premier volet comprend un bord libre avec une languette et le deuxième volet comprend un bord libre avec un créneau agencé pour coopérer avec ladite languette. Les volets coopèrent de manière stable afin de fermer l'accès à la face supérieure de l'enveloppe.

De manière avantageuse, la serre comprend un orifice de ventilation ménagé latéralement dans l'enveloppe et un moyen d'obturation dudit orifice monté mobile sur l'enveloppe et agencé pour modifier la section de passage dudit orifice de ventilation lors du mouvement du moyen d'obturation. Le déplacement du moyen d'obturation permet de réguler le débit d'air circulant entre l'extérieur et l'intérieur de la serre par l'orifice de ventilation.

Avantageusement, le moyen d'obturation, de préférence un disque rotatif, comprend des orifices de régulation de sections différentes.

De préférence, l'enveloppe est formée de plusieurs panneaux consécutifs pliables dont les bords libres des panneaux d'extrémité comprennent des moyens de liaison agencés pour relier lesdits panneaux d'extrémité lors du montage de la serre. La serre est monobloc et peut être érigée par pliage de manière simple et rapide.

De préférence encore, les moyens de liaison comprennent des fentes et des languettes de liaison.

Avantageusement, l'enveloppe comprend quatre panneaux trapézoïdaux de manière à former une serre de forme pyramidale.

La serre est avantageusement maintenue pliée lors du transport ce qui diminue son encombrement. De préférence, l'enveloppe comprend des moyens de verrouillage agencés pour solidariser les panneaux venant les uns contre les autres lorsque la serre est repliée sur plusieurs épaisseurs.

De préférence toujours, les moyens de verrouillage comportent une languette de verrouillage et une boucle de verrouillage ménagées respectivement sur deux panneaux venant l'un contre l'autre lorsque la serre est repliée sur plusieurs épaisseurs.

L'invention sera mieux comprise à l'aide du dessin annexé sur lequel :
- la figure 1A représente une vue en perspective d'une serre selon l'invention en position ouverte aérée ;
- la figure 1B représente une vue de côté de la serre de la figure 1A protégeant une plante ;
- la figure 2A représente une vue en perspective de la serre avec sa face supérieure fermée en position haute ;
- la figure 2B représente une vue de côté de la serre de la figure 2A protégeant une plante ;
- la figure 3A représente une vue en perspective de la serre avec sa face supérieure fermée en position basse ;
- la figure 3B représente une vue de côté de la serre de la figure 3A protégeant une plante ;
- la figure 4 représente un patron de la serre de la figure 1A ;
- la figure 5 représente une première vue de la serre de la figure 4 lors de son montage ;
- la figure 6 représente une deuxième vue la serre de la figure 4 lors de son montage ;
- la figure 7 représente la serre de la figure 4 montée et
- la figure 8 représente la serre de la figure 4 pliée en position de transport.

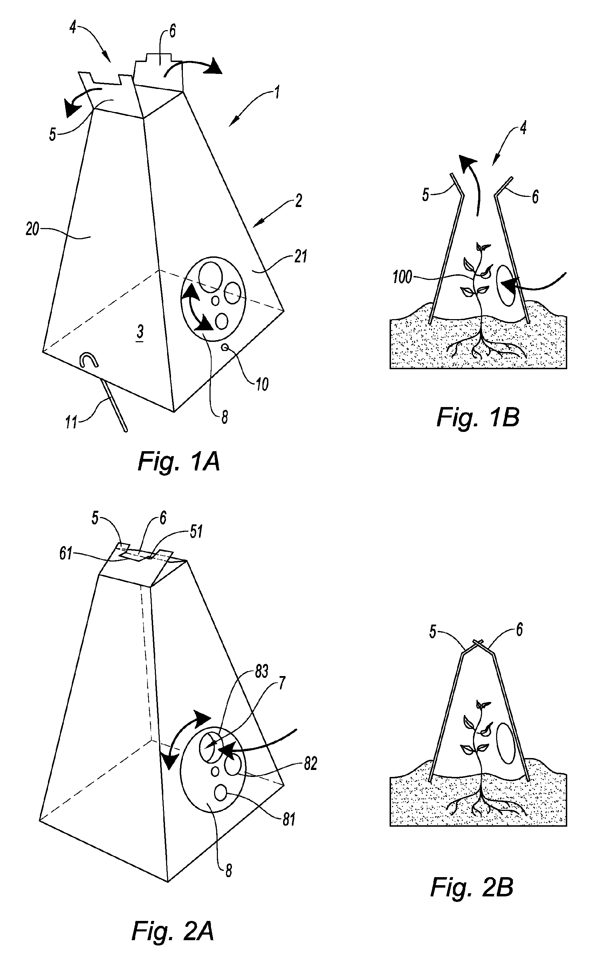

En référence à la figure 1A, la serre 1 de protection de plantes selon l'invention comporte une enveloppe tubulaire 2 s'étendant verticalement en position d'utilisation. L'enveloppe 2 comprend une face inférieure ouverte 3, pour permettre l'introduction de plantes dans la serre 1, et une face supérieure ouverte 4 pour permettre l'accès aux plantes de l'extérieur de la serre 1.

Lors de son installation autour d'une plante à protéger 100, comme représenté sur la figure 1B, la serre 1 est déposée verticalement de manière à ce que la plante se situe à l'intérieur de l'enveloppe 2. La serre 1 se présente alors comme une « cloche » protégeant la plante contre les rongeurs et limaces ainsi que contre le blanchiment de certains légumes.

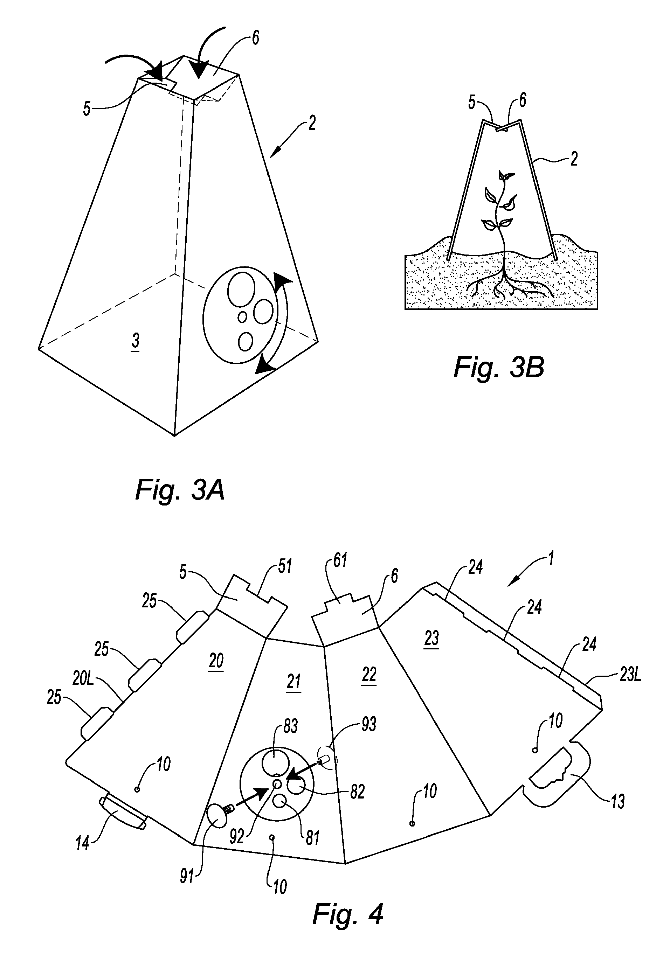

Dans cette forme de réalisation, l'enveloppe 2 comprend quatre panneaux consécutifs 20-23 formant une ceinture, comme représentée sur la figure 4, dont les panneaux d'extrémité 20, 23 comportent respectivement, sur leurs bords latéraux libres 20L, 23L, des moyens de liaison 24, 25 agencés pour relier lesdits panneaux d'extrémité 20, 23. Toujours en référence à la figure 4, les moyens de liaison sont amovibles et se présentent sous la forme de fentes 24 et de languettes de liaison 25, les dimensions des languettes de liaison 25 étant agencées pour permettre leur introduction dans les fentes 24 et la solidarisation des panneaux d'extrémité 20, 23. Il va de soi que d'autres moyens de liaison amovibles 24, 25 pourraient également convenir comme des clips, des attaches VELCRO ® ou autres.

En référence à la figure 1A, la serre érigée 1 se présente sous la forme d'une pyramide de base rectangulaire évasée de sa face supérieure 4 vers sa face inférieure 3. A cet effet, les quatre panneaux 20-23 de l'enveloppe 2 possèdent une forme trapézoïdale isocèle. Il va de soi que l'enveloppe 2 pourrait comprendre un nombre différent de panneaux de manière à former un volume intérieur pour recevoir la plante 100.

De préférence, l'enveloppe 2 de la serre 1 possède une paroi en double épaisseur permettant une protection thermique améliorée. La paroi en double épaisseur comprend ici deux murs en matière plastique séparés par une âme de même nature. La paroi peut éventuellement être traitée pour filtrer les rayons UV. La serre peut également être réalisée en matériau de couleur noire pour empêcher la transmission de lumière et faciliter le blanchiment de la plante.

Dans une forme de réalisation non représentée de l'invention, on applique sur la paroi de la serre un composé de protection agencé pour protéger la plante contre les attaques de nuisibles (insecticide) ou contre des maladies affectant les plantes. Ce composé est déposé par pulvérisation sur la paroi de la serre 1 et se solidifie pour former une pellicule sur la surface intérieure de la serre 1. Au cours de l'utilisation de la serre, le composé se sépare de la paroi et agit sur la plante pour la protéger. Il va de soi que le composé de protection pourrait également se présenter sous la forme d'une pastille collée sur la paroi intérieure de la serre 1. De manière similaire, le composé de protection peut également être remplacé par un composé nourrissant agencé pour fournir à la plante la nourriture appropriée à sa croissance. De manière préférée, le composé est intégré à la serre 1 dès sa fabrication.

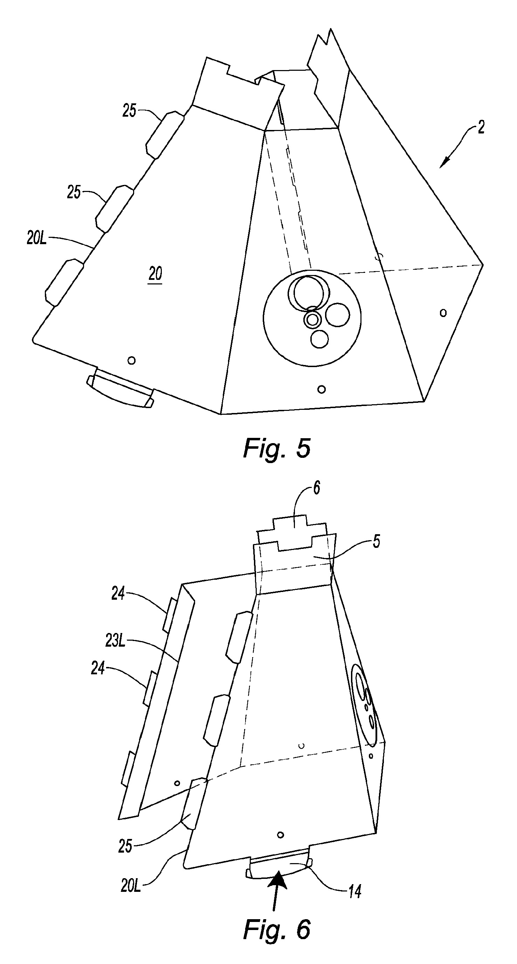

Lors du montage de la serre 1, cette dernière se présente initialement sous une forme dépliée à plat comme représenté sur la figure 4. Par pliage de la ceinture de panneaux 20-23, on forme le volume de la serre 1 comme représenté sur la figure 5. On approche les panneaux d'extrémité 20, 23 de la ceinture l'un de l'autre de manière à ce que les languettes de liaison 25 du panneau d'extrémité 23 soient alignées avec les fentes 24 du panneau d'extrémité 20 comme représenté sur la figure 6. On insère les languettes de liaison 25 dans lesdites fentes 24 pour fermer la ceinture et former l'enveloppe 2 de la serre 1. La serre 1 peut alors être placée sur la plante 100 à protéger.

La face supérieure 4 de l'enveloppe 2 comprend des moyens 5, 6 de fermeture de la face supérieure 4 agencés pour coopérer :
- selon une position de fermeture supérieure de la serre 1, dans laquelle les moyens de fermeture 5, 6 s'étendent à l'extérieur de l'enveloppe tubulaire 2 pour permettre une circulation d'air contrôlée dans la serre 1 et
- selon une position de fermeture inférieure dans laquelle les moyens de fermeture 5, 6 s'étendent à l'intérieur de l'enveloppe tubulaire 2 pour limiter la circulation d'air dans la serre 1.

En référence à la figure 4, les moyens 5, 6 de fermeture de la face supérieure 4 comportent un premier et un deuxième volets mobiles 5, 6 ménagés sur les bords supérieurs des panneaux 20, 22 de l'enveloppe 2, les panneaux étant en vis-à-vis lorsque la serre 1 est érigée. Dans cette forme de réalisation, les volets 5, 6 comprennent un corps sensiblement rectangulaire dont le bord inférieur est relié au bord supérieur du panneau 20, 22 de l'enveloppe 2 auquel le volet est rattaché.

Le premier volet 5, relié au premier panneau 20 de l'enveloppe, possède un bord supérieur libre, opposé à son bord inférieur relié audit panneau 20, dans lequel est ménagé un créneau 51 s'étendant verticalement vers le bas. Le deuxième volet 6, relié au troisième panneau 22 de l'enveloppe, possède un bord supérieur libre, opposé à son bord inférieur relié audit panneau 22, dans lequel est ménagée une languette 61 saillante verticalement vers le haut. Lorsque la serre 1 est érigée, les volets 5, 6 se font face et sont mobiles en rotation.

En fonction de la position des volets mobiles 5, 6 de fermeture de la face supérieure 4, la serre 1 présente plusieurs modes d'aération.

En référence aux figures 1A et 1B, la serre 1 est en position ouverte aérée pour permettre à l'air de circuler par la face supérieure 4. En position ouverte, les volets 5, 6 sont dépliés vers l'extérieur de la serre et n'obstruent pas la face supérieure 4 de l'enveloppe 2. Cette position ouverte est particulièrement appropriée pour ventiler la plante 100 protégée par la serre 1 en cas de forte chaleur. Par ailleurs, la serre 1 peut également être utilisée en tant que tuteur, la plante dépassant par la face supérieure 4 de la serre 1 et s'appuyant sur les bords supérieurs des panneaux 20-23 de l'enveloppe 2. Il est possible d'introduire via la face supérieure 4 l'extrémité d'un pulvérisateur pour traiter ladite plante 100, sans avoir préalablement retiré la serre.

En référence aux figures 2A et 2B, la serre 1 est en position de fermeture supérieure pour permettre une aération latérale de la serre 1. Dans cette position, les volets 5, 6 sont repliés vers l'intérieur, en contact l'un avec l'autre, et s'étendent à l'extérieur de l'enveloppe 2. La languette 61 du deuxième volet 6 vient se loger dans le créneau 51 du premier volet 5 de manière à immobiliser les volets en position de fermeture supérieure. Dans cette position, les volets 5, 6 s'étendent à l'extérieur de l'enveloppe 2 et forment un « toit » pour la face supérieure 4 de l'enveloppe 2. Dans cette position, un flux d'air peut circuler par la face supérieure 4 de manière latérale entre le bord supérieur d'un panneau 21, 23 dénué de volet et les bords latéraux des volets 5, 6 en position de fermeture supérieure. Cette position de fermeture supérieure est particulièrement appropriée pour contrôler la circulation d'air dans la serre 1 tout en protégeant la plante des intempéries telles que la grêle.

En référence aux figures 3A et 3B, la serre 1 est en position de fermeture inférieure pour isoler la plante 100 du milieu extérieur. Dans cette position, les volets 5, 6 sont repliés vers l'intérieur de la serre, en contact l'un avec l'autre, et s'étendent à l'intérieur de l'enveloppe 2. La languette 61 du deuxième volet 6 vient se loger dans le créneau 51 du premier volet 5 de manière à immobiliser les volets en position de fermeture. Dans cette position, les volets 5, 6 s'étendent à l'intérieur de l'enveloppe 2 et forment un entonnoir. Cette position de fermeture inférieure est particulièrement appropriée pour permettre l'isolation de la plante 100 protégée par la serre 1 en cas de températures extérieures très basses, telles que les gelées printanières. La circulation d'air dans la serre de l'extérieur vers l'intérieur est limitée.

Ainsi, en fonction des conditions extérieures, la serre 1 peut facilement s'adapter pour protéger de manière optimale la plante 100 située à l'intérieur de son enveloppe 2. La longueur des créneaux et des languettes est adaptée de manière à ne permettre une fermeture de la face supérieure que dans les positions de fermeture supérieure et inférieure, une fermeture de la face supérieure « à plat » n'étant pas possible.

De manière préférée, la serre 1 comprend un orifice de ventilation 7 ménagé latéralement dans l'enveloppe 2, à travers un de ses panneaux, et un moyen 8 d'obturation dudit orifice 7 monté mobile sur l'enveloppe 2 et agencé pour modifier la section de passage dudit orifice de ventilation 7 lors du mouvement du moyen d'obturation 8.

De préférence, le moyen d'obturation 8 est un disque rotatif comprenant des orifices de régulation 81-83 de sections différentes. En référence à la figure 4, le disque 8 comprend trois orifices 81-83 de section croissante espacés angulairement. Le disque 8 est relié au panneau 21 de l'enveloppe 2 par un moyen de rotation se présentant ici sous la forme d'un clip mâle 91 et d'un clip femelle 93 qui coopèrent pour former un pivot. Une extrémité du clip mâle 91 traverse successivement le centre 92 du disque 8 et le panneau 21 de l'enveloppe 2 et est reçue dans un logement du clip femelle 93, situé à l'intérieur de l'enveloppe, afin de solidariser les deux clips 91, 93. Le disque 8 est relié au panneau 21 de manière à ce que les orifices de régulation 81-83 du disque 8 entrent en correspondance avec l'orifice de ventilation 7 du panneau 21 lors de la rotation du disque 8. De manière avantageuse, le disque 8 est pivoté manuellement pour réguler l'aération de la serre 1. Un orifice de diamètre plus important peut être prévu par lequel on peut arroser la plante 100 en concentrant l'arrosage sur le pied de la plante 100 et en évitant son feuillage.

En référence à la figure 4, la serre 1 comprend des orifices 10 de maintien de la serre 1 ménagés respectivement dans les panneaux 20-23 de la serre, de préférence dans leur partie inférieure. Des sardines de fixation 11 sont introduites, par l'extérieur de l'enveloppe 2, à travers les orifices de maintien 10 et pénètrent dans le sol sur lequel repose la serre de manière à sécuriser la serre au sol à la manière d'une toile de tente, la serre étant alors peu susceptible de s'envoler en cas de rafale de vent. De préférence, les orifices de maintien 10 sont ménagés dans chacun des panneaux 20-23. Il va de soi que seuls certains panneaux pourraient être percés d'orifices de maintien 10.

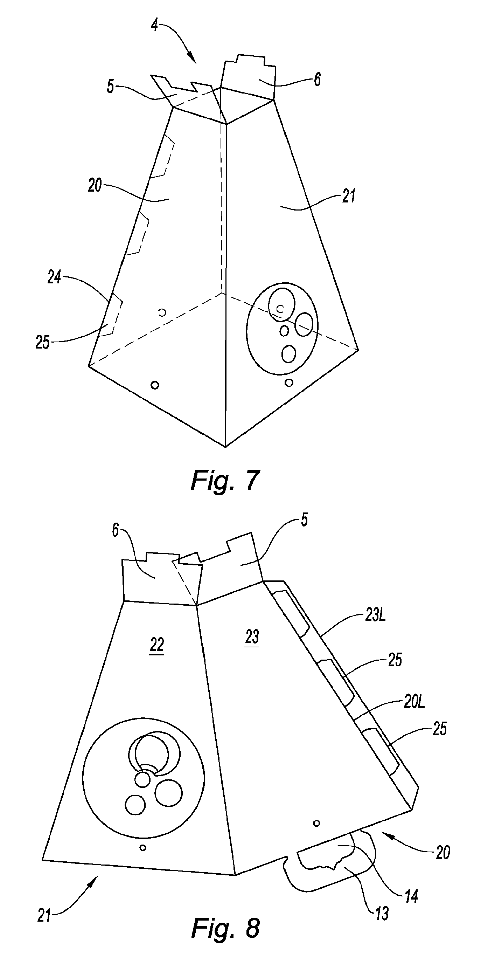

Pour faciliter le transport, la ceinture de panneaux 20-23 peut être repliée sur elle-même de manière à ce que les panneaux soient superposés les uns sur les autres et ainsi diminuer l'encombrement de la serre 1 en position dépliée. En référence à la figure 8, la ceinture de panneaux est repliée en double épaisseur pour le transport. Il va de soi qu'un pliage en plus de deux épaisseurs pourrait également convenir.

Afin de maintenir la serre 1 pliée pour le transport, on prévoit des moyens de verrouillage 13, 14 agencés pour solidariser les panneaux venant les uns contre les autres lorsque la serre est repliée en plusieurs épaisseurs. En référence à la figure 4, une languette de verrouillage 14 est ménagée sur le bord inférieur du panneau 20 et s'étend vers le bas. Une boucle de verrouillage 13 est ménagée sur le bord inférieur du panneau 23 et s'étend vers le bas. Lors du pliage de la serre 1 pour son transport, on déplace le panneau 20 comprenant la languette de verrouillage 14 contre le panneau 22 comprenant la boucle 13. Tout en maintenant la serre pliée, on introduit la languette de verrouillage 14 dans la boucle 13 pour les solidariser ensemble et éviter que la serre 1 ne se déplie.

## Revendications

1. Serre de protection (1) pour au moins une plante (100) se présentant sous la forme d'une enveloppe tubulaire verticale (2) comportant :
- une face inférieure ouverte (3), destinée à permettre l'introduction de la plante (100) à l'intérieur de l'enveloppe (2),
- une face supérieure ouverte (4) permettant un accès à la plante (100), serre **caractérisée par le fait qu'**elle comporte des moyens (5, 6) de fermeture de la face supérieure (4) agencés pour coopérer :
- selon une première position de fermeture supérieure dans laquelle les moyens de fermeture (5, 6) s'étendent à l'extérieur de l'enveloppe tubulaire (2) pour permettre une circulation d'air contrôlée dans la serre (1) et
- selon une deuxième position de fermeture inférieure dans laquelle les moyens de fermeture (5, 6) s'étendent à l'intérieur de l'enveloppe tubulaire (2) pour limiter la circulation d'air dans la serre par ladite face supérieure (4).

2. Serre selon la revendication 1, dans laquelle les moyens de fermeture (5, 6) se présentent sous la forme d'au moins deux volets mobiles (5, 6) solidaires de l'enveloppe (2).

3. Serre selon la revendication 2, dans laquelle le premier volet (6) comprend un bord libre avec une languette (61) et le deuxième volet (5) comprend un bord libre avec un créneau (51) agencé pour coopérer avec ladite languette (61).

4. Serre selon l'une des revendications 1 à 3, comprenant un orifice de ventilation (7) ménagé latéralement dans l'enveloppe (2) et un moyen (8) d'obturation dudit orifice (7) monté mobile sur l'enveloppe (2) et agencé pour modifier la section de passage dudit orifice de ventilation (7) lors du mouvement du moyen d'obturation (8).

5. Serre selon la revendication 4, dans laquelle le moyen d'obturation (8), de préférence un disque rotatif (8), comprend des orifices de régulation (81-83) de sections différentes.

6. Serre selon l'une des revendications 1 à 5, dans laquelle l'enveloppe (2) est formée de plusieurs panneaux consécutifs pliables (20-23) dont les bords libres (20L, 23L) des panneaux d'extrémité (20, 23) comprennent des moyens de liaison (24, 25) agencés pour relier lesdits panneaux d'extrémité (20, 23) lors du montage de la serre (1).

7. Serre selon la revendication 6, dans laquelle les moyens de liaison (24, 25) comprennent des fentes (24) et des languettes de liaison (25).

8. Serre selon l'une des revendications 6 à 7, dans laquelle l'enveloppe (2) comprend quatre panneaux trapézoïdaux (20-23) de manière à former une serre (1) de forme pyramidale.

9. Serre selon l'une des revendications 1 à 8, dans laquelle l'enveloppe (2) comprend des moyens de verrouillage (13, 14) agencés pour solidariser les panneaux (20, 23) venant les uns contre les autres lorsque la serre (1) est repliée en plusieurs épaisseurs.

10. Serre selon la revendication 9, dans laquelle les moyens de verrouillage (13, 14) comportent une languette de verrouillage (14) et une boucle de verrouillage (13) ménagées respectivement sur deux panneaux (20, 23) venant l'un contre l'autre lorsque la serre (1) est repliée en plusieurs épaisseurs.
